# EUROPÄISCHE PATENTANMELDUNG

(11) **EP 0 899 056 A1**
(43) Veröffentlichungstag der Anmeldung: **03.03.1999**
(21) Anmeldenummer: 97114839.0
(22) Anmeldetag: 27.08.1997
(51) Int. Cl.: B23Q 1/76

(54) **Einrichtung zum Aufspannen und/oder zur Halterung von Werkstücken auf einer Drehmaschine**

(71) Anmelder: FORKARDT GmbH, 40699 Erkrath (DE)
(72) Erfinder: Kempken, Rainer, 40699 Erkrath (DE)
(74) Vertreter: Stenger, Watzke & Ring Patentanwälte

(57) **Zusammenfassung**

Die Erfindung betrifft eine Einrichtung zum Aufspannen und/oder zur Halterung von Werkstücken (W) auf einer Drehmaschine nach Art einer Lünette mit drei auf das Werkstück (W) einwirkenden Haltegliedern (4), die durch ein gemeinsames Antriebsglied (5) zwischen einer Ruhestellung und einer Wirkstellung beweglich sind. Am vorderen Ende des Antriebsgliedes (5) ist das mittlere Halteglied (4) angeordnet. Die beiden anderen Halteglieder (4) sind jeweils am vorderen Ende eines Hebels (2) angeordnet, der jeweils um eine parallel zur Werkstückdrehachse verlaufende Schwenkachse an einem Lünettengehäuse (1) durch zwischen den hinteren Enden der Hebel (2) und dem Antriebsglied (5) ausgebildete Steuerflächen (7, 8) verschwenkbar gelagert ist. Um ein einfaches Einlegen und Herausnehmen der Werkstücke (W) ohne Behinderung durch die Lünette zu ermöglichen, ist das Lünettengehäuse (1) in einem feststehenden Zusatzgehäuse (9) zwischen einer zurückgezogenen Ladeposition (L) und einer vorgeschobenen Arbeitsposition (A) verschiebbar angeordnet und zwischen diesen Positionen derart gesteuert, daß sich die Halteglieder (4) in der Ladeposition (L) in ihrer geöffneten Ruhestellung seitlich neben dem Werkstück (W) befinden und nach dem Überführen des Lünettengehäuses (1) in die Arbeitsposition (A) aus ihrer geöffneten Ruhestellung in die Wirkstellung überführbar sind.

## Beschreibung

Die Erfindung betrifft eine Einrichtung zum Aufspannen und/oder zur Halterung von Werkstücken auf einer Drehmaschine nach Art einer Lünette mit drei auf das Werkstück einwirkenden, in einer gemeinsamen, rechtwinklig zur Drehachse des Werkstückes liegenden Ebene angeordneten Haltegliedern, die durch ein gemeinsames Antriebsglied zwischen einer Ruhestellung und einer Wirkstellung beweglich sind, wobei am vorderen Ende des Antriebsgliedes das mittlere Halteglied angeordnet ist und die beiden anderen Halteglieder jeweils am vorderen Ende eines Hebels angeordnet sind, der jeweils um eine parallel zur Werkstückdrehachse verlaufende Schwenkachse an einem Lünettengehäuse durch zwischen den hinteren Enden der Hebel und dem Antriebsglied ausgebildete Steuerflächen verschwenkbar gelagert ist.

Derartige, allgemein als Lünetten bezeichnete Einrichtungen zum Aufspannen und/oder zur Halterung von Werkstücken auf einer Drehmaschine sind aus der EP 235 246 B sowie aus der DE 35 43 806 C2 bekannt.

Um das Einlegen der Werkstücke in die insbesondere für eine Schleifbearbeitung verwendeten Lünetten zu erleichtern, sind aus den deutschen Gebrauchsmusterschriften 92 01 513.1 und 295 10 543.7 selbstzentrierende Lünetten bekannt, bei denen der jeweils obere Hebel über das durch die Offenstellung definierte Ende des Spannweges hinaus in eine Einlegestellung überführt werden kann. Für diese zusätzliche Schwenkbewegung des einen Hebels werden vorzugsweise zusätzliche Stellantriebe verwendet.

Der Erfindung liegt die **Aufgabe** zugrunde, eine Einrichtung der eingangs beschriebenen Art zum Aufspannen und/oder zur Halterung von Werkstücken auf einer Drehmaschine derart weiterzubilden, daß das Einlegen der Werkstücke in die Drehmaschine und das Entnehmen der fertig bearbeiteten Werkstücke aus der Drehmaschine nicht behindert wird.

Die **Lösung** dieser Aufgabenstellung durch die Erfindung ist dadurch gekennzeichnet, daß das Lünettengehäuse in einem feststehenden Zusatzgehäuse zwischen einer zurückgezogenen Ladeposition und einer vorgeschobenen Arbeitsposition verschiebbar angeordnet und zwischen diesen Positionen derart gesteuert ist, daß sich die Halteglieder in der Ladeposition in ihrer geöffneten Ruhestellung seitlich neben dem Werkstück befinden und nach dem Überführen des Lünettengehäuses in die Arbeitsposition aus ihrer geöffneten Ruhestellung in die Wirkstellung überführbar sind.

Durch die erfindungsgemäße Anordnung eines Zusatzgehäuses sowie die erfindungsgemäße Steuerung des Lünettengehäuses innerhalb dieses Zusatzgehäuses wird eine Konstruktion geschaffen, bei der sich die Werkstücke ohne Behinderung durch die seitlich verfahrene Lünette in die Drehmaschine einlegen bzw. aus der Drehmaschine entnehmen lassen, und zwar ohne daß es erforderlich ist, zumindest einen der Hebel der Lünette eine zusätzliche Bewegung ausführen zu lassen.

Bei einer bevorzugten Ausführung der Erfindung sind sowohl das Antriebsglied der Lünette als auch das Lünettengehäuse durch ein und denselben Antrieb angetrieben, wobei es bei diesem Antrieb um einen pneumatischen, hydraulischen oder elektrischen Längs- oder Drehantrieb handeln kann, der mit entsprechenden Sicherheitseinrichtungen sowie Sperr- und Wegkontrollen ausgestattet ist. Durch den gemeinsamen Antrieb einerseits für das Verfahren des Lünettengehäuses innerhalb des Zusatzgehäuses und andererseits für die Spann- und Öffnungsbewegung der Lünette ergibt sich nicht nur eine einfache und preiswerte Konstruktion, sondern ein zwangsläufiger Ablauf der Bewegungen, so daß Fehlbedienungen ausgeschlossen sind. Der gemeinsame Antrieb, beispielsweise ein Druckmittelzylinder, wird in der üblichen Weise entweder an der Lünette oder am Zusatzgehäuse befestigt.

Gemäß einem weiteren Merkmal der Erfindung ist der Antrieb mit dem Antriebsglied verbunden und das Antriebsglied mit einem Kupplungselement versehen, das bei einer Bewegung zwischen der Ladeposition und der Arbeitsposition das Antriebsglied mit dem Lünettengehäuse verbindet und in der Arbeitsposition eine Relativbewegung zwischen Antriebsglied und im Zusatzgehäuse festgelegtem Lünettengehäuse ermöglicht.

Bei einer bevorzugten Ausführungsform der Erfindung ist das Kupplungselement durch mindestens ein Keilstück gebildet, das etwa rechtwinklig zur Bewegungsrichtung des Antriebsgliedes im Lünettengehäuse verschiebbar gelagert und mit Keilflächen versehen ist, die einerseits mit entsprechenden Keilflächen am Antriebsglied und andererseits mit entsprechenden Keilflächen am Zusatzgehäuse zusammenwirken. Bei einer Bewegung des Lünettengehäuses aus der Ladeposition in die Arbeitsposition bewirkt das Keilstück durch Anlage seiner radial außenliegenden Kopffläche am Zusatzgehäuse über die zwischen Keilstück und Antriebsglied verlaufenden Keilflächen eine Kupplung zwischen Antriebsglied und Lünettengehäuse, wogegen bei einer Bewegung des Lünettengehäuses zwischen Arbeitsposition und Ladeposition das Antriebsglied formschlüssig am Lünettengehäuse anliegt. In der Arbeitsposition des Lünettengehäuses wird das Keilstück mit einem radial außenliegenden Teil durch die zwischen Antriebsglied und Keilstück verlaufenden Keilflächen in eine im Zusatzgehäuse ausgebildete Aussparung überführt, wobei die Kupplung zwischen Antriebsglied und Lünettengehäuse zwecks Ausführung von Relativbewegungen zwischen Antriebsglied und Lünettengehäuse aufgehoben ist.

Um einseitige Belastung der Bauteile zu vermeiden, können gemäß einem weiteren Merkmal der Erfindung zwei Keilstücke gegenüberliegend im Lünettengehäuse angeordnet sein. Weiterhin ist es vorteilhaft, die am Zusatzgehäuse angeordneten Keilflächen jeweils an einem separaten, in eine Nut des Zusatzgehäuses eingesetzten Steuerstück auszubilden, um die Herstellung und die Montage zu vereinfachen.

Schließlich wird mit der Erfindung vorgeschlagen, das Zusatzgehäuse mit einem Mantelstück und einem Boden auszubilden und stirnseitig mit einer als vorderer Anschlag für das in der Arbeitsposition befindliche Lünettengehäuse ausgebildeten Deckelleiste zu versehen, wobei an dieser Deckelleiste eine mit dem Lünettengehäuse zusammenwirkende Dichtung angeordnet werden kann.

Auf der Zeichnung ist ein Ausführungsbeispiel der erfindungsgemäßen Einrichtung dargestellt, und zwar zeigen:
- Fig. 1: eine schematische, teilweise geschnittene Seitenansicht der Einrichtung mit in der zurückgezogenen Ladeposition befindlichem Lünettengehäuse;
- Fig. 2: eine der Fig. 1 entsprechende Ansicht mit in die Arbeitsposition verschobenem Lünettengehäuse mit in der Ruhestellung befindlichen Haltegliedern und
- Fig. 3: eine weitere, den Fig. 1 und 2 entsprechende Ansicht, in der sich das Lünettengehäuse in der Arbeitsposition und die Halteglieder in der Wirkstellung befinden.

In allen drei Figuren ist ein Ausführungsbeispiel einer Lünette dargestellt, an deren Lünettengehäuse 1 zwei Hebel 2 um jeweils einen Lagerbolzen 3 verschwenkbar gelagert sind. Die Schwenkachsen der Hebel 2 verlaufen parallel zu der Drehachse eines stangenförmigen Werkstückes W, das in eine auf der Zeichnung nicht dargestellte Drehmaschine eingespannt ist. Zur Halterung dieses beispielsweise einer Schleifoperation zu unterziehenden Werkstückes W sind die Hebel 2 der Lünette an ihrem vorderen Ende mit einem Halteglied versehen, das beim dargestellten Ausführungsbeispiel jeweils als Rolle 4 ausgebildet ist. Ein weiteres, ebenfalls als Rolle 4 ausgebildetes Halteglied befindet sich am vorderen Ende eines Antriebsgliedes 5, das beim Ausführungsbeispiel mit der Kolbenstange 6 eines im übrigen nicht dargestellten Antriebes, vorzugsweise eines Druckmittelzylinders verbunden ist.

Damit die als Rolle 4 ausgebildeten Halteglieder eine zentrische Spannbewegung ausführen, sind beim Ausführungsbeispiel am Antriebsglied 5 zwei Steuerrollen 7 drehbar gelagert, die mit am hinteren Ende der Hebel 2 ausgebildeten Steuerkurven 8 zusammenwirken. Bei einer Relativbewegung des Antriebsgliedes 5 gegenüber dem Lünettengehäuse 1 erfolgt auf diese Weise eine zentrische Bewegung der Rollen 4.

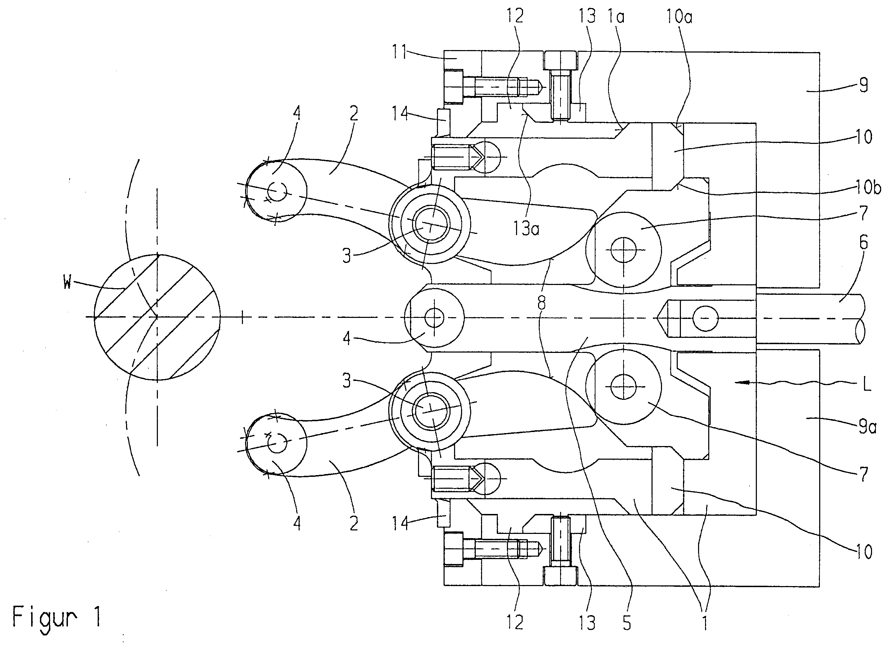

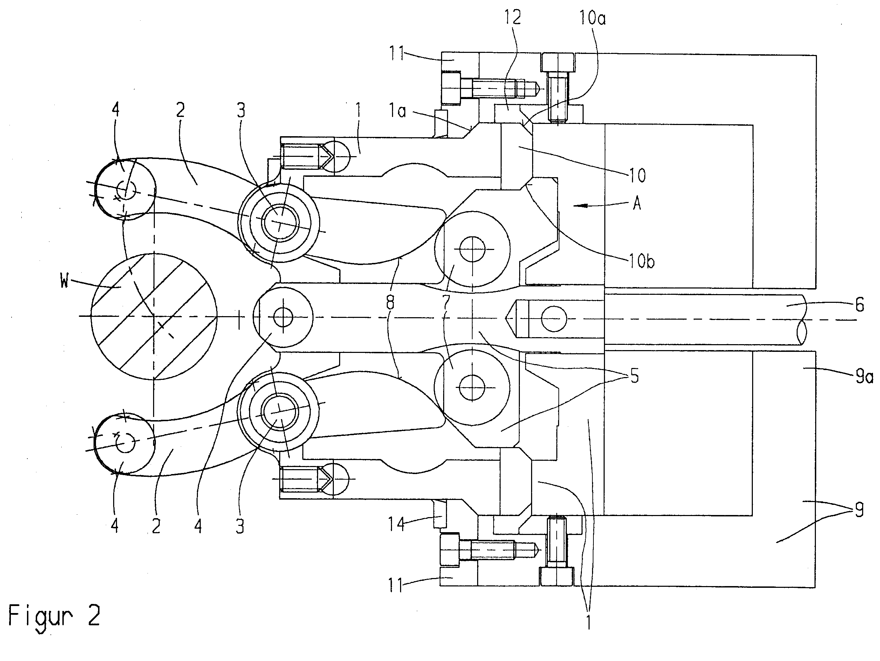

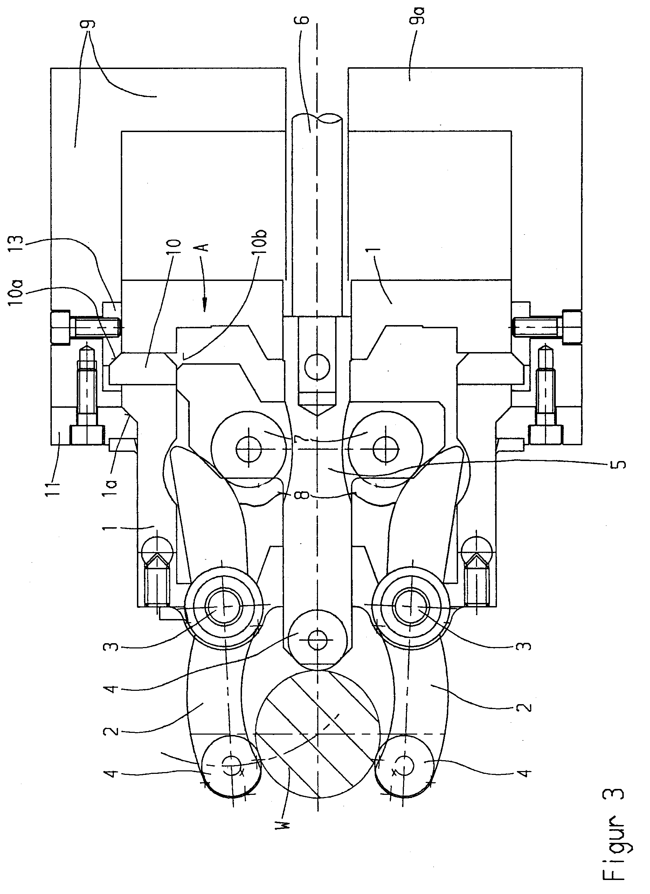

Das Lünettengehäuse 1 ist innerhalb eines Zusatzgehäuses 9 in Bewegungsrichtung des Antriebsgliedes 5 verschiebbar gelagert, und zwar zwischen einer in das Zusatzgehäuse 9 zurückgezogenen Ladeposition L gemäß Fig. 1 und einer Arbeitsposition A, die in den Fig. 2 und 3 dargestellt ist. Während eine Relativbewegung des Antriebsgliedes 5 zum Lünettengehäuse 1 im Bereich zwischen der Ladeposition L und der Arbeitsposition A des Lünettengehäuses 1 nicht möglich ist, kann diese Relativbewegung stattfinden, sobald sich das Lünettengehäuse 1 in der Arbeitsposition A befindet.

Sowohl für die innerhalb des Zusatzgehäuses 9 stattfindende Bewegung des Lünettengehäuses 1 zwischen Ladeposition L und Arbeitsposition A als auch für die Relativbewegung des Antriebsgliedes 5 gegenüber dem sich in der Arbeitsposition A befindenden Lünettengehäuse 1 wird ein einziger Antrieb verwendet, der mit dem Antriebsglied 5 verbunden ist, wie dies die beim Ausführungsbeispiel dargestellte Kolbenstange 6 eines nicht gezeichneten Druckmittelzylinders zeigt.

Mit Hilfe dieser Kolbenstange 6 wird das Antriebsglied 5 des Lünettengehäuses 1 aus der in Fig. 1 dargestellten Ladeposition L, in der sich die geöffneten Hebel 2 seitlich neben dem Werkstück W befinden, in die Arbeitsposition A gemäß Fig. 2 verschoben. Hierbei nimmt das Antriebsglied 5 das Lünettengehäuse 1 über zwei Kupplungselemente mit, die beim Ausführungsbeispiel jeweils als Keilstück 10 ausgebildet sind. Jedes Keilstück 10 befindet sich in einer Aussparung des Lünettengehäuses 1 und ist sowohl an seinem außenliegenden, als auch an seinem innenliegenden Ende mit jeweils einer Keilfläche 10a bzw. 10b versehen. Jedes Keilstück 10 ist etwa rechtwinklig zur Bewegungsrichtung des Antriebsgliedes 5 verschiebbar im Lünettengehäuse 1 gelagert und wird zwischen seinen beiden Endstellungen durch die Keilflächen 10a und 10b gesteuert.

Da gemäß Fig. 1 die Keilstücke 10 mit ihrer außenliegenden Stirnfläche an der Innenfläche des Zusatzgehäuses 9 anlegen und ihre innenliegenden Keilflächen 10b mit entsprechend ausgebildeten Keilflächen des Antriebsgliedes 5 zusammenwirken, bewirkt eine Bewegung des Antriebsgliedes 5 aus der Ladeposition L in Richtung der Arbeitsposition A eine formschlüssige Mitnahme des Lünettengehäuses 1.

Sobald dieses Lünettengehäuse 1 gemäß Fig. 2 mit einer Anschlagfläche 1a an einer entsprechenden Gegenfläche einer die vordere Öffnung des Zusatzgehäuses 9 umgebenden Deckelleiste 11 zur Anlage kommt, führt eine weitere Bewegung des Antriebsgliedes 5 durch die Kolbenstange 6 zu einer Verschiebung der Keilstücke 10 nach außen, wie dies aus einem Vergleich der Fig. 2 und 3 hervorgeht. Diese Verschiebung erfolgt aufgrund der am innenliegenden Ende der Keilstücke 10 ausgebildeten Keilflächen 10b und aufgrund der Tatsache, daß in diesem Bereich im Zusatzgehäuse 9 jeweils eine Aussparung 12 für jedes Keilstück 10 vorgesehen ist. Sobald das Keilstück 10 aufgrund seiner innenliegenden Keilfläche 10b in diese Aussparung 12 überführt worden ist und hier mit seiner außenliegenden Keilfläche 10a an einer entsprechenden Gegenfläche 13a eines Steuerstückes 13 zur Anlage kommt, wird die durch die Keilstücke 10 bisher hervorgerufene formschlüssige Kupplung zwischen Antriebsglied 5 und Lünettengehäuse 1 aufgehoben. Eine weitere Verschiebung des Antriebsgliedes 5 erfolgt somit in Form einer Relativbewegung zum Lünettengehäuse 1 und hat demgemäß über die Steuerrollen 7 des Antriebsgliedes 5 sowie die Steuerkurven 8 der Hebel 2 eine Zustellbewegung der am vorderen Ende der Hebel 2 angeordneten Rollen 4 zur Folge. Da gleichzeitig die am vorderen Ende des Antriebsgliedes 5 angeordnete Rolle 4 in Richtung auf das Werkstück W vorgeschoben wird, erfolgt durch die weitere Ausschubbewegung des Antriebsgliedes 5 bei in der Arbeitsposition A befindlichem Lünettengehäuse 1 nunmehr eine zentrische Spannbewegung der durch Rollen 4 gebildeten Halteglieder der Lünette, so daß diese gemäß Fig. 3 das Werkstück W zentrisch einspannen bzw. stützen.

Wenn nach Beendigung der Schleifoperation das Werkstück W aus der Drehmaschine entnommen werden soll, erfolgt sowohl ein Öffnen der Lünette als auch ein Zurückziehen des Lünettengehäuses 1 aus der Arbeitsposition A in die Ladeposition L ausschließlich durch die Kolbenstange 6 des nicht dargestellten Antriebes.

Zu Beginn der Rückzugbewegung dieser Kolbenstange 6 aus der in Fig. 3 dargestellten Wirkstellung der Lünette erfolgt eine Relativbewegung des Antriebsgliedes 5 zu dem in der Arbeitsposition A verharrenden Lünettengehäuse 1. Hierdurch öffnen sich die Hebel 2; gleichzeitig wird das Antriebsglied 5 mit seiner Rolle 4 vom Werkstück W zurückgezogen. Sobald das Antriebsglied 5 gemäß Fig. 2 zur Anlage am Lünettengehäuse 1 gelangt, wobei sich die Rollen 4 in der vollständig geöffneten Ruhestellung befinden, bewirkt eine weitere Rückzugbewegung des Antriebsgliedes 5 über die Kolbenstange 6 eine einwärts gerichtete Bewegung der Keilstücke 10, und zwar aufgrund des Zusammenwirkens der Keilflächen 10a mit den Gegenflächen 13a der Steuerstücke 13. Auf diese Weise werden die Keilstücke 10 in das Lünettengehäuse 1 zurückgedrückt, so daß nunmehr durch eine weitere Rückzugsbewegung des Antriebsgliedes 5 eine Bewegung des Lünettengehäuses 1 aus der Arbeitsposition A in Richtung auf die Ladeposition L erfolgen kann. Bei dieser Bewegung nimmt das Antriebsglied 5 das Lünettengehäuse 1 durch Anlage an diesem Lünettengehäuse 1 mit, wie insbesondere aus Fig. 2 hervorgeht. Am Ende der Rückzugbewegung liegt das Lünettengehäuse 1 mit eingezogenen Keilstücken 10 am Boden des Zusatzgehäuses 9 an. Damit ist die Ausgangsposition nach Fig. 1 erreicht. Das bearbeitete Werkstück W kann ohne Behinderung durch die seitlich neben ihm stehenden Hebel 2 aus der Drehmaschine entnommen werden.

Die Darstellungen in den Fig. 1 bis 3 lassen schließlich erkennen, daß an der Deckelleiste 11 eine Dichtung 14 angeordnet werden kann, die ein Eindringen von Schmutz in das Innere des Zusatzgehäuses 9 und damit in das Innere der Lünette verhindert.

### Bezugszeichenliste

- A: Arbeitsposition
- L: Ladeposition
- W: Werkstück
- 1: Lünettengehäuse
- 1a: Anschlagfläche
- 2: Hebel
- 3: Lagerbolzen
- 4: Rolle (Halteglied)
- 5: Antriebsglied
- 6: Kolbenstange
- 7: Steuerrolle
- 8: Steuerkurve
- 9: Zusatzgehäuse
- 9a: Boden
- 10: Keilstück (Kupplungselement)
- 10a: Keilfläche
- 10b: Keilfläche
- 11: Deckelleiste
- 12: Aussparung
- 13: Steuerstück
- 13a: Gegenfläche
- 14: Dichtung

## Patentansprüche

1. Einrichtung zum Aufspannen und/oder zur Halterung von Werkstücken (W) auf einer Drehmaschine nach Art einer Lünette mit drei auf das Werkstück (W) einwirkenden, in einer gemeinsamen, rechtwinklig zur Drehachse des Werkstückes (W) liegenden Ebene angeordneten Haltegliedern (4), die durch ein gemeinsames Antriebsglied (5) zwischen einer Ruhestellung und einer Wirkstellung beweglich sind, wobei am vorderen Ende des Antriebsgliedes (5) das mittlere Halteglied (4) angeordnet ist und die beiden anderen Halteglieder (4) jeweils am vorderen Ende eines Hebels (2) angeordnet sind, der jeweils um eine parallel zur Werkstückdrehachse verlaufende Schwenkachse an einem Lünettengehäuse (1) durch zwischen den hinteren Enden der Hebel (2) und dem Antriebsglied (5) ausgebildete Steuerflächen (7, 8) verschwenkbar gelagert ist,
**dadurch gekennzeichnet,**
daß das Lünettengehäuse (1) in einem feststehenden Zusatzgehäuse (9) zwischen einer zurückgezogenen Ladeposition (L) und einer vorgeschobenen Arbeitsposition (A) verschiebbar angeordnet und zwischen diesen Positionen (L, A) derart gesteuert ist, daß sich die Halteglieder (4) in der Ladeposition (L) in ihrer geöffneten Ruhestellung seitlich neben dem Werkstück (W) befinden und nach dem Überführen des Lünettengehäuses (1) in die Arbeitsposition (A) aus ihrer geöffneten Ruhestellung in die Wirkstellung überführbar sind.

2. Einrichtung nach Anspruch 1, dadurch gekennzeichnet, daß sowohl das Antriebsglied (5) als auch das Lünettengehäuse (1) durch denselben Antrieb (6) angetrieben sind.

3. Einrichtung nach Anspruch 1 und 2, dadurch gekennzeichnet, daß der Antrieb (6) mit dem Antriebsglied (5) verbunden und das Antriebsglied (5) mit einem Kupplungselement (10) versehen ist, das bei einer Bewegung zwischen der Ladeposition (L) und der Arbeitsposition (A) das Antriebsglied (5] mit dem Lünettengehäuse (1) verbindet und in der Arbeitsposition (A) eine Relativbewegung zwischen Antriebsglied (5) und im Zusatzgehäuse (9) festgelegtem Lünettengehäuse (1) ermöglicht.

4. Einrichtung nach Anspruch 3, dadurch gekennzeichnet, daß das Kupplungselement durch mindestens ein Keilstück (10) gebildet ist, das etwa rechtwinklig zur Bewegungsrichtung des Antriebsgliedes (5) im Lünettengehäuse (1) verschiebbar gelagert und mit Keilflächen (10a, 10b) versehen ist, die einerseits mit entsprechenden Keilflächen am Antriebsglied (5) und andererseits mit entsprechenden Gegenflächen (13a) am Zusatzgehäuse (9) zusammenwirken.

5. Einrichtung nach Anspruch 4, dadurch gekennzeichnet, daß bei einer Bewegung des Lünettengehäuses (1) aus der Ladeposition (L) in die Arbeitsposition (A) das Keilstück (10) durch Anlage seiner radial außenliegenden Kopffläche am Zusatzgehäuse (9) über die zwischen Keilstück (10) und Antriebsglied (5) verlaufenden Keilfächen (10a) eine Kupplung zwischen Antriebsglied (5) und Lünettengehäuse (1) bewirkt und daß bei einer Bewegung des Lünettengehäuses (1) zwischen Arbeitsposition (A) und Ladeposition (L) das Antriebsglied (5) formschlüssig am Lünettengehäuse (1) anliegt.

6. Einrichtung nach Anspruch 4, dadurch gekennzeichnet, daß in der Arbeitsposition (A) des Lünettengehäuses (1) das Keilstück (10) mit einem radial außenliegenden Teil durch die zwischen Antriebsglied (5) und Keilstück (10) verlaufenden Keilflächen (10b) in eine im Zusatzgehäuse (9) ausgebildete Aussparung (12) überführt wird und die Kupplung zwischen Antriebsglied (5) und Lünettengehäuse (1) zwecks Ausführung von Relativbewegungen zwischen Antriebsglied (5) und Lünettengehäuse (1) aufgehoben ist.

7. Einrichtung nach mindestens einem der Ansprüche 1 bis 6, dadurch gekennzeichnet, daß zwei Keilstücke (10) gegenüberliegend im Lünettengehäuse (1) angeordnet sind.

8. Einrichtung nach mindestens einem der Ansprüche 1 bis 7, dadurch gekennzeichnet, daß die am Zusatzgehäuse (9) angeordneten Keilflächen (13a) jeweils an einem separaten, in eine Nut des Zusatzgehäuses (9) eingesetzten Steuerstück (13) ausgebildet sind.

9. Einrichtung nach mindestens einem der Ansprüche 1 bis 8, dadurch gekennzeichnet, daß das Zusatzgehäuse (9) mit einem Mantelstück und einem Boden (9a) ausgebildet und stirnseitig mit einer als vorderer Anschlag für das in der Arbeitsposition (A) befindliche Lünettengehäuse (1) ausgebildeten Deckelleiste (11) versehen ist.

10. Einrichtung nach Anspruch 9, dadurch gekennzeichnet, daß an der Deckelleiste (11) eine mit dem Lünettengehäuse (1) zusammenwirkende Dichtung (14) angeordnet ist.
